# FASCICULE DE BREVET EUROPEEN

(11) **EP 2 943 606 B1**
(45) Date de publication et mention de la délivrance du brevet: **29.03.2017**
(21) Numéro de dépôt: 14703110.8
(22) Date de dépôt: 08.01.2014
(51) Int. Cl.: D04H 1/4209, D04H 1/4218, D04H 1/4226, D04H 1/4242, D04H 1/736, D04H 1/74, D04H 1/76, D04H 5/04, D04H 5/12, E04B 1/76, E04B 1/80, C03B 37/04

(54) **PRODUIT D'ISOLATION THERMIQUE A BASE DE LAINE MINERALE ET PROCEDE DE FABRICATION DU PRODUIT**
WÄRMEISOLIERPRODUKT AUF MINERALWOLLEBASIS UND VERFAHREN ZUR HERSTELLUNG DIESES PRODUKTES
THERMAL INSULATION PRODUCT BASED ON MINERAL WOOL AND METHOD OF MANUFACTURING THE PRODUCT

(30) Priorité: 11.01.2013 FR 1350235
(43) Date de publication de la demande: 18.11.2015
(73) Titulaire: Saint-Gobain Isover, 92400 Courbevoie (FR)
(72) Inventeur: TERAGAMI, Kenichiro, Kasumigaura-city Ibaraki-pref 315-8518 (JP)
(74) Mandataire: Saint-Gobain Recherche
(86) Numéro de dépôt international: PCT/FR2014/050018
(87) Numéro de publication internationale: WO 2014/108630

(56) Documents cités:
- EP-A1- 0 133 083
- EP-A1- 0 503 554
- WO-A1-2005/095727
- WO-A1-2009/112783
- US-A- 5 041 178

## Description

L'invention concerne un produit d'isolation thermique à base de laine minérale, telle que de la laine de verre, destinée à entrer notamment dans la composition de produits d'isolation thermique, et éventuellement acoustique, plus particulièrement pour le doublage de parois et/ou de toitures.

Le document WO2009/112783 décrit l'état de la technique.

Sur le marché de l'isolation, les fournisseurs souhaitent toujours proposer des produits de plus en plus performants en termes d'isolation thermique. La performance thermique d'un produit est généralement rendue par la connaissance de la conductivité thermique λ. On rappelle que la conductivité thermique λ d'un produit est la capacité du produit à se laisser traverser par un flux de chaleur; elle est exprimée en W/m.K. Plus cette conductivité est faible, plus le produit est isolant, et meilleure est donc l'isolation thermique.

Sur le marché actuel, les produits à base de fibres minérales qui sont en laine de roche ou en laine de verre se placent entre 0,040 et 0,035 W/m.K, voire pour certains autour de 0,032 W/m.K. A moins qu'il n'en soit spécifié autrement, la conductivité thermique est celle mesurée de façon conventionnelle à 10°C selon la norme ISO 8301.

On souhaite toujours améliorer l'isolation thermique d'un bâtiment. Cette amélioration est en général réalisée en augmentant l'épaisseur du produit isolant. Toutefois, plus l'épaisseur augmente, plus le produit est lourd et difficile à manipuler et plus le volume de la pièce isolée diminue.

Il y a donc un besoin pour un produit d'isolation thermique à base de laine minérale, qui présente des propriétés améliorées d'isolation thermique sans augmentation de l'épaisseur du produit.

Pour cela, l'invention propose un produit d'isolation thermique à base de laine minérale comprenant des fibres minérales, le produit comportant deux faces principales et des bords longitudinaux et transversaux perpendiculaires aux faces principales, le produit étant caractérisé par les taux d'orientation suivants :
- un taux d'orientation longitudinal supérieur ou égal à 48%, voire à 50%, selon un angle de plus ou moins 6° par rapport au plan des faces principales, lorsque les fibres minérales sont comptabilisées seulement en coupe longitudinale, et
- un taux d'orientation moyen supérieur ou égal à 40%, voire à 45%, selon un angle de plus ou moins 6° par rapport au plan des faces principales, lorsque les fibres minérales sont comptabilisées à la fois en coupe transversale et en coupe longitudinale.

Selon une autre particularité, le produit est en outre caractérisé par les taux d'orientation suivants :
- un taux d'orientation longitudinal supérieur ou égal à 75%, voire à 80%, selon un angle de plus ou moins 12° par rapport au plan des faces principales, lorsque les fibres minérales sont comptabilisées seulement en coupe longitudinale, et
- un taux d'orientation moyen supérieur ou égal à 70%, voire à 72%, selon un angle de plus ou moins 12° par rapport au plan des faces principales, lorsque les fibres minérales sont comptabilisées à la fois en coupe transversale et en coupe longitudinale.

Selon une autre particularité, le produit est en outre caractérisé par les taux d'orientation suivants :
- un taux d'orientation longitudinal supérieur ou égal à 90% selon un angle de plus ou moins 24° par rapport au plan des faces principales, lorsque les fibres minérales sont comptabilisées seulement en coupe longitudinale, et
- un taux d'orientation moyen supérieur ou égal à 85% selon un angle de plus ou moins 24° par rapport au plan des faces principales, lorsque les fibres minérales sont comptabilisées à la fois en coupe transversale et en coupe longitudinale.

Selon une autre particularité, les fibres minérales ont un micronaire compris entre 8 et 15 L/min.

Selon une autre particularité, le produit a une conductivité thermique inférieure ou égale à 32 mW/m.K et une densité d'au moins 15 kg/m³, de préférence entre 15 et 60 kg/m³, en particulier entre 15 et 27 kg/m³, voire comprise entre 18 et 25 kg/m³.

Selon une autre particularité, le produit a une conductivité thermique inférieure ou égale à 29 mW/m.K et une densité d'au moins 40 kg/m³, de préférence supérieure ou égale à 50 kg/m³, voire entre 55 et 80 kg/m³, en particulier entre 55 et 65 kg/m³.

L'invention concerne également un procédé de fabrication d'un produit d'isolation thermique à base de laine minérale, comprenant les étapes suivantes :
- fabrication de fibres minérales par centrifugation interne,
- réception des fibres minérales sur un tapis de réception ayant une vitesse V₀,
- convoyage des fibres minérales sur un premier groupe de convoyeurs, la vitesse V₁ du dernier convoyeur du premier groupe de convoyeurs étant comprise entre 100% et 105% de V₀,
- convoyage des fibres minérales sur un deuxième groupe de convoyeurs, la vitesse V₂ du dernier convoyeur du deuxième groupe de convoyeurs étant comprise entre 108% et 120% de V₀, de préférence entre 110% et 115% de V₀.

Selon une autre particularité, les convoyeurs du deuxième groupe ont tous une vitesse supérieure à celle des convoyeurs du premier groupe.

Selon une autre particularité, le nombre de convoyeurs du premier groupe est compris entre 3 et 10, de préférence entre 4 et 8, en particulier entre 5 et 7.

Selon une autre particularité, le nombre de convoyeurs du deuxième groupe est compris entre 2 et 5, de préférence 2 ou 3.

Selon une autre particularité, la vitesse de chaque convoyeur du premier groupe augmente de la même quantité que pour le convoyeur précédent.

Selon une autre particularité, la vitesse de chaque convoyeur du deuxième groupe augmente de la même quantité que pour le convoyeur précédent ou la vitesse de chaque convoyeur du deuxième groupe augmente plus vite que celle du convoyeur précédent.

Selon une autre particularité, au niveau des deux derniers convoyeurs au moins, les fibres minérales sont progressivement comprimées en passant entre les au moins deux derniers convoyeurs et au moins deux dispositifs d'entraînement supérieurs.

Dans l'ensemble de la demande, le terme « moyenne » signifie « moyenne arithmétique ».

Par ailleurs, toutes les gammes de valeurs de la demande définies par « compris entre » incluent les bornes de la gamme.

L'invention se rapporte à un produit d'isolation thermique à base de laine minérale comprenant des fibres minérales, le produit comportant deux faces principales et des bords longitudinaux et transversaux perpendiculaires aux faces principales, le produit étant caractérisé par les taux d'orientation suivants :
- un taux d'orientation longitudinal supérieur ou égal à 48%, voire à 50%, selon un angle de plus ou moins 6° par rapport au plan des faces principales, lorsque les fibres minérales sont comptabilisées seulement en coupe longitudinale, et
- un taux d'orientation moyen supérieur ou égal à 40%, voire à 45%, selon un angle de plus ou moins 6° par rapport au plan des faces principales, lorsque les fibres minérales sont comptabilisées à la fois en coupe transversale et en coupe longitudinale.

Le taux d'orientation étant caractéristique de l'orientation des fibres minérales dans le produit, le produit selon l'invention présente une structure avec une horizontalité exceptionnelle des fibres minérales, non seulement dans le sens longitudinal mais également en moyenne dans les deux directions longitudinale et transversale. Cela permet de diminuer la conductivité thermique du produit, et ainsi d'améliorer le pouvoir isolant du produit sans augmenter son épaisseur.

La détermination des taux d'orientation est effectuée de la manière suivante.

Tout d'abord, on prélève dans le produit plusieurs éprouvettes parallélépipédiques (notamment au moins 6) de même taille, d'épaisseur identique à l'épaisseur du produit. La découpe est réalisée au moyen d'un instrument tranchant tel qu'une lame produisant une découpe nette sans entraînement des fibres dans la direction de découpe, ne dénaturant ainsi pas l'agencement des fibres formant le produit avant découpe. Chaque éprouvette comprend deux premières faces, dites faces longitudinales, qui sont à la fois parallèles aux bords longitudinaux du produit et perpendiculaires aux surfaces principales du produit, et deux secondes faces, dites faces transversales, qui sont perpendiculaires à la fois aux bords longitudinaux du produit et perpendiculaires aux surfaces principales du produit.

Ensuite, au moins une face longitudinale et une face transversale de chaque éprouvette sont observées l'une après l'autre. Chaque face observée est divisée en zones unitaires de petites dimensions (typiquement 1x1 mm²), et les fibres sont détectées visuellement dans chaque zone unitaire. On détermine la direction principale de l'ensemble des fibres minérales dans cette zone unitaire. On note dans chaque zone unitaire l'angle formé par la direction principale de l'ensemble des fibres minérales par rapport aux faces principales du produit. Cet angle est appelé orientation principale de la zone unitaire. Chaque face comprend une distribution d'orientations principales de l'ensemble des zones unitaires de la face. On appelle taux d'orientation selon un secteur angulaire 0°+/-α la fraction de zones unitaires pour lesquelles l'orientation principale est dans ce secteur angulaire. Un outil de capture d'image couplé à un logiciel de traitement d'image peut être utilisé à cet effet, par exemple pour réaliser un traitement d'image par analyse de contrastes.

Pour au moins une face longitudinale, respectivement au moins une face transversale, d'une éprouvette, on détermine ainsi le taux d'orientation longitudinal t_{O}ⁱ_{L}(0°+/-α), respectivement transversal toⁱ_{T}(0°+/-α), de cette face dans un secteur angulaire donné 0°+/-α. Puis on fait la moyenne des données de toutes les éprouvettes pour exprimer le taux d'orientation longitudinal TO_{L}(0°+/-α), respectivement transversal TO_{T}(0°+/-α), dans le produit en coupe longitudinale, respectivement transversale, dans le même secteur angulaire donné 0°+/-α. Pour chaque secteur angulaire donné 0°+/-α, on réalise également la moyenne TOₘ(0°+/-α) des taux d'orientation transversal et longitudinal dans le produit, TOₘ(0°+/-α) étant alors égal à [TO_{L}(0°+/-α)+ TO_{T}(0°+/-α)]/2.

Ainsi, dans le produit selon l'invention, si le plan des faces principales du produit est horizontal, le taux d'orientation longitudinal est supérieur ou égal à 48%, voire à 50%, dans les secteurs angulaires 0°+/-6° et 180°+/-6° (c'est-à-dire TO_{L}(0°+/-6°) ≥ 48%, voire ≥ 50%), et le taux d'orientation moyen est supérieur ou égal à 40 %, voire à 45%, dans les mêmes secteurs angulaires (c'est-à-dire TOₘ(0°+/-6°) ≥ 40%, voire ≥ 45%).

De même, dans le produit selon l'invention, toujours si le plan des faces principales du produit est horizontal, le taux d'orientation longitudinal est de préférence supérieur ou égal à 75%, voire à 80%, dans les secteurs angulaires 0°+/-12° et 180°+/-12° (c'est-à-dire TO_{L}(0°+/-12°) ≥ 75%, voire ≥ 80%), et le taux d'orientation moyen est de préférence supérieur ou égal à 70%, voire à 72%, dans les mêmes secteurs angulaires (c'est-à-dire TOₘ(0°+/-12°) ≥ 70%, voire ≥ 72%).

Et, dans le produit selon l'invention, toujours si le plan des faces principales du produit est horizontal, le taux d'orientation longitudinal est de préférence supérieur ou égal à 90% dans les secteurs angulaires 0°+/-24° et 180°+/-24° (c'est-à-dire TO_{L}(0°+/-24°) ≥ 90%), et le taux d'orientation moyen est de préférence supérieur ou égal à 85% dans les mêmes secteurs angulaires (c'est-à-dire TOₘ(0°+/-24°) ≥ 85%).

En d'autres termes, l'horizontalité des fibres minérales dans le produit est caractérisée par :
- un taux d'orientation longitudinal TO_{L}(0°+/-6°) supérieur ou égal à 48%, voire à 50%, selon un angle de plus ou moins 6° par rapport au plan des faces principales, lorsque les fibres minérales sont comptabilisées seulement en coupe longitudinale, et, et
- un taux d'orientation moyen TOₘ(0°+/-6°) supérieur ou égal à 40%, voire à 45%, selon un angle de plus ou moins 6° par rapport au plan des faces principales, lorsque les fibres minérales sont comptabilisées à la fois en coupe transversale et en coupe longitudinale.

De façon préférée, l'horizontalité des fibres minérales est également caractérisée par :
- un taux d'orientation longitudinal TO_{L}(0°+/-12°) supérieur ou égal à 75%, voire à 80%, selon un angle de plus ou moins 12° par rapport au plan des faces principales, lorsque les fibres minérales sont comptabilisées seulement en coupe longitudinale, et
- un taux d'orientation moyen TOₘ(0°+/-12°) supérieur ou égal à 70%, voire à 72%, selon un angle de plus ou moins 12° par rapport au plan des faces principales, lorsque les fibres minérales sont comptabilisées à la fois en coupe transversale et en coupe longitudinale.

De préférence, l'horizontalité des fibres minérales est aussi caractérisée par :
- un taux d'orientation longitudinal TO_{L}(0°+/-24°) supérieur ou égal à 90% selon un angle de plus ou moins 24° par rapport au plan des faces principales, lorsque les fibres minérales sont comptabilisées seulement en coupe longitudinale, et
- un taux d'orientation moyen TOₘ(0°+/-24°) supérieur ou égal à 85% selon un angle de plus ou moins 24° par rapport au plan des faces principales, lorsque les fibres minérales sont comptabilisées à la fois en coupe transversale et en coupe longitudinale.

Le produit selon l'invention a ainsi un grand nombre de fibres minérales sensiblement parallèles à ses faces principales. Le produit possède grâce à cela des propriétés thermiques améliorées, comme nous le verrons plus loin.

En particulier, le produit d'isolation selon l'invention a une conductivité thermique inférieure ou égale à 32 mW/m.K et une densité d'au moins 15 kg/m³, de préférence inférieure ou égale à 60 kg/m³, en particulier inférieure ou égale à 27 kg/m³, voire comprise entre 18 et 25 kg/m³, ou encore une conductivité thermique inférieure ou égale à 29 mW/m.K et une densité d'au moins 40 kg/m³, de préférence supérieure ou égale à 50 kg/m³, voire entre 55 et 80 kg/m³, en particulier entre 50 et 65 kg/m3, voire entre 55 et 65 kg/m³.

Par ailleurs, les fibres minérales du produit selon l'invention ont de préférence un micronaire compris entre 8 et 15 L/min, voire entre 8 et 12 L/min, ou encore entre 9 et 11 L/min, en particulier un micronaire supérieur ou égal à 10 L/min pour un produit de conductivité thermique inférieure ou égale à 29 mW/m.K, ou bien entre 8 et 12 L/min pour un produit de conductivité thermique inférieure ou égale à 32 mW/m.K.

On rappelle que la finesse des fibres est souvent déterminée par la valeur de leur micronaire (F) sous 5 g. La mesure du micronaire appelée aussi "indice de finesse " rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, est réalisée selon la norme DIN 53941 ou ASTM D 1448 et utilise un appareil dit « appareil micronaire ».

Toutefois un tel appareil présente une limite de mesure quant à une certaine finesse des fibres. Pour des fibres très fines, une finesse (« le micronaire ») peut être mesurée en L/min grâce à une technique connue et décrite dans la demande de brevet WO2003/098209. Cette demande de brevet concerne en effet un dispositif de détermination de l'indice de finesse de fibres comportant un dispositif de mesurage de l'indice de finesse, ledit dispositif de mesurage de l'indice de finesse étant pourvu d'une part, d'au moins un premier orifice relié à une cellule de mesure adaptée pour recevoir un échantillon constitué d'une pluralité de fibres et d'autre part, d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, caractérisé en ce que le dispositif de mesurage de l'indice de finesse comporte au moins un débitmètre volumétrique du fluide traversant ladite cellule. Ce dispositif donne des correspondances entre des valeurs « micronaire » et des litres par minute (L/mn).

A titre indicatif, on peut noter selon ce document WO2003/098209, une relation de correspondance entre les valeurs micronaire et la valeur du diamètre moyen de l'échantillon de fibres. Globalement, une valeur micronaire d'environ 12 L/mn correspond à un diamètre moyen de 2,5 à 3 µm, une valeur de 13,5 L/mn correspond sensiblement à un diamètre moyen de 3 à 3,5 µm, et enfin 18 L/mn à environ 4 à 5 µm.

Des exemples de réalisation de l'invention seront donnés plus loin.

Le procédé de fabrication du produit d'isolation selon l'invention va maintenant être décrit.

La laine minérale est fabriquée par un procédé de centrifugation interne à partir de matière minérale fondue. Un exemple de procédé de centrifugation interne est décrit ci-dessous.

Un filet de verre fondu est introduit dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant d'étirage gazeux à température et vitesse élevées, produit par un brûleur annulaire. Le courant d'étirage gazeux, en longeant la paroi du centrifugeur, amincit les filaments et les transforme en fibres. Les fibres formées sont entraînées par le courant d'étirage gazeux vers un tapis de réception généralement constitué par une bande perméable aux gaz, associée à des moyens d'aspiration. Un liant, nécessaire pour lier les fibres entre elles en un produit laineux, est pulvérisé sur les fibres pendant qu'elles sont étirées vers le tapis de réception. L'accumulation de fibres sur le tapis de réception sous l'effet de l'aspiration fournit un tapis de fibres dont l'épaisseur peut varier selon le produit final à obtenir.

Le tapis de réception avance à une vitesse V₀. Les fibres minérales sont ensuite convoyées vers une étuve afin de faire polymériser le liant, au moyen de convoyeurs disposés entre le tapis de réception et l'étuve. Selon le procédé de l'invention, les convoyeurs sont répartis en deux groupes : un premier groupe à la sortie du tapis de réception, suivi d'un deuxième groupe entre le premier groupe et l'étuve.

Le premier groupe de convoyeurs comprend entre 3 et 10 convoyeurs, de préférence entre 4 et 8 convoyeurs, en particulier entre 5 et 7 convoyeurs. La vitesse de chaque convoyeur du premier groupe peut être égale à celle du tapis de réception. La vitesse V₁ du dernier convoyeur du premier groupe de convoyeurs est au minimum égale à 100% de V₀. En variante, afin d'assurer une tension suffisante des convoyeurs, la vitesse de chaque convoyeur du premier groupe peut augmenter progressivement d'un convoyeur au suivant. De préférence, la vitesse de chaque convoyeur du premier groupe augmente de la même quantité que pour le convoyeur précédent. Ainsi, par exemple, le premier convoyeur a une vitesse de 101% de V₀, le deuxième convoyeur a une vitesse de 102% de V₀, le troisième convoyeur a une vitesse de 103% de V₀, etc... Dans ce cas-là l'augmentation est de 101% de V₀ à chaque convoyeur. La vitesse V₁ du dernier convoyeur du premier groupe de convoyeurs est toutefois au maximum égale à 105% de V₀. Entre ces deux extrêmes, toutes les variantes peuvent être envisagées mais la vitesse V₁ du dernier convoyeur du premier groupe de convoyeur est comprise entre 100% et 105% de V₀.

Le deuxième groupe de convoyeurs comprend entre 2 et 5 convoyeurs, de préférence 2 ou 3 convoyeurs. La vitesse V₂ du dernier convoyeur du deuxième groupe de convoyeurs est comprise entre 108% et 120% de V₀, de préférence entre 110% et 115% de V₀. La vitesse de chaque convoyeur du deuxième groupe augmente de préférence d'un convoyeur au suivant. Et de préférence, tous les convoyeurs du deuxième groupe ont une vitesse supérieure à celle des convoyeurs du premier groupe. De préférence, la vitesse de chaque convoyeur du deuxième groupe augmente de la même quantité que pour le convoyeur précédent ou la vitesse de chaque convoyeur du deuxième groupe augmente plus vite que celle du convoyeur précédent.

De plus, au niveau des deux derniers convoyeurs au moins, les fibres minérales sont progressivement comprimées en passant entre les au moins deux derniers convoyeurs et au moins deux dispositifs d'entraînement supérieurs, les dispositifs d'entraînement supérieurs entraînant les fibres minérales à la même vitesse que les convoyeurs situés en-dessous. Au moins une paire de convoyeur/dispositif d'entraînement supérieur peut être symétrique par rapport à l'horizontale. Cette compression progressive peut être initiée dès le premier groupe de convoyeurs. La compression progressive peut intervenir par paliers avec succession d'étapes de compression puis d'entraînement avec maintien de la compression entre deux compressions successives.

Les dispositifs d'entraînement supérieurs et les convoyeurs des premier et deuxième groupes peuvent être de tous types, par exemple de type tapis, bande ou rouleau.

La présence du deuxième groupe de convoyeurs avec une vitesse au moins égale à 108% de V₀ permet d'avoir des fibres plus horizontales dans toutes les directions du produit, plus particulièrement dans la direction longitudinale et, ainsi, d'améliorer les propriétés thermiques du produit.

Deux exemples de produit selon l'invention ont été réalisés par centrifugation interne en produisant des fibres minérales ayant un micronaire de 10 L/min.

Pour réaliser le premier exemple, les convoyeurs du premier groupe allaient tous à la même vitesse que le tapis de réception. Dans le deuxième groupe de convoyeurs, les deux convoyeurs allaient respectivement, d'amont vers l'aval, à une vitesse de 103% de V₀ et à une vitesse de 110% de V₀, soit une progression non uniforme de la vitesse. Le produit obtenu a une épaisseur de 100 mm, une densité de 20 kg/m³ et une conductivité thermique de 31,77 mW/m.K. Le produit obtenu a un taux d'orientation longitudinal TO_{L}(0°+/-6°) de 53% selon un angle de plus ou moins 6° par rapport au plan des faces principales du produit lorsque les fibres minérales sont comptabilisées seulement en coupe longitudinale. Le taux d'orientation moyen TOₘ(0°+/-6°) du produit obtenu est de 46% selon un angle de plus ou moins 6° par rapport au plan des faces principales du produit lorsque les fibres minérales sont comptabilisées à la fois en coupe transversale et en coupe longitudinale.

Pour réaliser le deuxième exemple, les cinq convoyeurs du premier groupe allaient respectivement, d'amont vers l'aval, à une vitesse de 101% de V₀, 102% de V₀, 103% de V₀, 104% de V₀ et 105% de V₀. Dans le deuxième groupe de convoyeurs, les deux convoyeurs allaient respectivement, d'amont vers l'aval, à une vitesse de 105% de V₀ et à une vitesse de 110% de V₀, soit une progression uniforme de la vitesse. Le produit obtenu a une épaisseur de 60 mm, une densité de 55 kg/m³ et une conductivité thermique de 28,95 mW/m.K. Le produit obtenu a un taux d'orientation longitudinal TO_{L}(0°+/-6°) de 50% selon un angle de plus ou moins 6° par rapport au plan des faces principales du produit lorsque les fibres minérales sont comptabilisées seulement en coupe longitudinale. Le taux d'orientation moyen TOₘ(0°+/-6°) du produit obtenu est de 45% selon un angle de plus ou moins 6° par rapport au plan des faces principales du produit lorsque les fibres minérales sont comptabilisées à la fois en coupe transversale et en coupe longitudinale.

Le procédé a également permis d'obtenir des produits de conductivité inférieure ou égale à 32 mW/m.K avec des fibres de micronaire notamment compris entre 8 et 11 L/min avec un gain de poids substantiel par rapport à un produit classique.

Grâce au procédé selon l'invention, nous avons donc réussi à fabriquer des produits avec une conductivité thermique améliorée pour une épaisseur raisonnable.

## Revendications

1. Produit d'isolation thermique à base de laine minérale comprenant des fibres minérales, le produit comportant deux faces principales et des bords longitudinaux et transversaux perpendiculaires aux faces principales, le produit étant **caractérisé par** les taux d'orientation suivants :
- un taux d'orientation longitudinal TO_{L}(0°+/-6°) supérieur ou égal à 48%, voire à 50%, selon un angle de plus ou moins 6° par rapport au plan des faces principales, lorsque les fibres minérales sont comptabilisées seulement en coupe longitudinale, et
- un taux d'orientation moyen TOₘ(0°+/-6°) supérieur ou égal à 40%, voire à 45%, selon un angle de plus ou moins 6° par rapport au plan des faces principales, lorsque les fibres minérales sont comptabilisées à la fois en coupe transversale et en coupe longitudinale.

2. Produit d'isolation thermique selon la revendication 1, le produit étant en outre **caractérisé par** les taux d'orientation suivants :
- un taux d'orientation longitudinal TO_{L}(0°+/-12°) supérieur ou égal à 75%, voire à 80%, selon un angle de plus ou moins 12° par rapport au plan des faces principales, lorsque les fibres minérales sont comptabilisées seulement en coupe longitudinale, et
- un taux d'orientation moyen TOₘ(0°+/-12°) supérieur ou égal à 70%, voire à 72%, selon un angle de plus ou moins 12° par rapport au plan des faces principales, lorsque les fibres minérales sont comptabilisées à la fois en coupe transversale et en coupe longitudinale.

3. Produit d'isolation thermique selon la revendication 1 ou 2, le produit étant en outre **caractérisé par** les taux d'orientation suivants :
- un taux d'orientation longitudinal TO_{L}(0°+/-24°) supérieur ou égal à 90% selon un angle de plus ou moins 24° par rapport au plan des faces principales, lorsque les fibres minérales sont comptabilisées seulement en coupe longitudinale, et
- un taux d'orientation moyen TOₘ(0°+/-24°) supérieur ou égal à 85% selon un angle de plus ou moins 24° par rapport au plan des faces principales, lorsque les fibres minérales sont comptabilisées à la fois en coupe transversale et en coupe longitudinale.

4. Produit d'isolation thermique selon l'une des revendications 1 à 3, dans lequel les fibres minérales ont un micronaire compris entre 8 et 15 L/min.

5. Produit d'isolation thermique selon l'une des revendications 1 à 4, ayant une conductivité thermique inférieure ou égale à 32 mW/m.K et une densité d'au moins 15 kg/m³, de préférence entre 15 et 60 kg/m³, en particulier entre 15 et 27 kg/m³, voire comprise entre 18 et 25 kg/m³.

6. Produit d'isolation thermique selon l'une des revendications 1 à 5, ayant une conductivité thermique inférieure ou égale à 29 mW/m.K et une densité d'au moins 40 kg/m³, de préférence supérieure ou égale à 50 kg/m³, voire entre 55 et 80 kg/m³, en particulier entre 50 et 65 kg/m3, voire entre 55 et 65 kg/m³.

7. Procédé de fabrication d'un produit d'isolation thermique à base de laine minérale, comprenant les étapes suivantes :
- fabrication de fibres minérales par centrifugation interne,
- réception des fibres minérales sur un tapis de réception ayant une vitesse V₀,
- convoyage des fibres minérales sur un premier groupe de convoyeurs, la vitesse V₁ du dernier convoyeur du premier groupe de convoyeurs étant comprise entre 100% et 105% de V₀,
- convoyage des fibres minérales sur un deuxième groupe de convoyeurs, la vitesse V₂ du dernier convoyeur du deuxième groupe de convoyeurs étant comprise entre 108% et 120% de V₀, de préférence entre 110% et 115% de V₀.

8. Procédé selon la revendication 7, dans lequel les convoyeurs du deuxième groupe ont tous une vitesse supérieure à celle des convoyeurs du premier groupe.

9. Procédé selon la revendication 7 ou 8, dans lequel le nombre de convoyeurs du premier groupe est compris entre 3 et 10, de préférence entre 4 et 8, en particulier entre 5 et 7.

10. Procédé selon l'une des revendications 7 à 9, dans lequel le nombre de convoyeurs du deuxième groupe est compris entre 2 et 5, de préférence 2 ou 3.

11. Procédé selon l'une des revendications 7 à 10, dans lequel la vitesse de chaque convoyeur du premier groupe augmente de la même quantité que pour le convoyeur précédent.

12. Procédé selon l'une des revendications 7 à 11, dans lequel la vitesse de chaque convoyeur du deuxième groupe augmente de la même quantité que pour le convoyeur précédent ou la vitesse de chaque convoyeur du deuxième groupe augmente plus vite que celle du convoyeur précédent.

13. Procédé selon l'une des revendications 7 à 12, dans lequel, au niveau des deux derniers convoyeurs au moins, les fibres minérales sont progressivement comprimées en passant entre les au moins deux derniers convoyeurs et au moins deux dispositifs d'entraînement supérieurs.

## Patentansprüche

1. Dämmstofferzeugnis auf Basis von Mineralwolle enthaltend Mineralfasern, wobei das Erzeugnis zwei Hauptflächen und zu den Hauptflächen vertikale Längs- und Querseiten aufweist, und das Erzeugnis durch folgende Orientierungsgrade gekennzeichnet ist:
• einen Orientierungsgrad in Längsrichtung TO_{L} (0°+/-6°) größer oder gleich 48%, insbesondere größer oder gleich 50%, mit einem Winkel von +6° bis -6° bezogen auf die Ebenen der Hauptflächen, wenn die Mineralfasern nur in einem Längsschnitt erfasst werden, und
• einen mittleren Orientierungsgrad TOₘ (0°+/-6°) größer oder gleich 40%, insbesondere größer oder gleich 45%, mit einem Winkel von +6° bis -6° bezogen auf die Ebene der Hauptflächen, wenn die Mineralfasern zugleich in einem Längsschnitt und in einem Querschnitt erfasst werden.

2. Dämmstofferzeugnis nach Anspruch 1, wobei das Erzeugnis weiterhin durch folgende Orientierungsgrade gekennzeichnet ist:
• einen Orientierungsgrad in Längsrichtung TO_{L} (0°+/-12°) größer oder gleich 75%, insbesondere größer oder gleich 80%, mit einem Winkel von +12° bis -12° bezogen auf die Ebene der Hauptflächen, wenn die Mineralfasern nur in einem Längsschnitt erfasst werden, und
• einen mittleren Orientierungsgrad TOₘ (0°+/-12°) größer oder gleich 70%, insbesondere größer oder gleich 72%, mit einem Winkel von +12° oder -12° bezogen auf die Ebene der Hauptflächen, wenn die Mineralfasern zugleich in einem Längsschnitt und in einem Querschnitt erfasst werden.

3. Dämmstofferzeugnis nach Anspruch 1 oder 2, wobei das Erzeugnis weiterhin durch folgende Orientierungsgrade gekennzeichnet ist:
• einen Orientierungsgrad in Längsrichtung TO_{L} (0°+/-24°) größer oder gleich 90% mit einem Winkel von +24° bis -24° bezogen auf die Ebenen der Hauptflächen, wenn die Mineralfasern nur in einem Längsschnitt erfasst werden, und
• einen mittleren Orientierungsgrad TOₘ (0°+/-24°) größer oder gleich 85% mit einem Winkel von +24° bis -24° bezogen auf die Ebenen der Hauptflächen, wenn die Mineralfasern zugleich in einem Längsschnitt und in einem Querschnitt erfasst werden.

4. Dämmstofferzeugnis nach einem der Ansprüche 1 bis 3, wobei die Mineralfasern einen Micronaire von 8 bis 15 l/min aufweisen.

5. Dämmstofferzeugnis nach einem der Ansprüche 1 bis 4, aufweisend eine Wärmeleitfähigkeit kleiner oder gleich 32 mW/m·K und eine Dichte von mindestens 15 kg/m³, vorzugsweise zwischen 15 und 60 kg/m³, insbesondere zwischen 15 und 27 kg/m³, besonders bevorzugt zwischen 18 und 25 kg/m³.

6. Dämmstofferzeugnis nach einem der Ansprüche 1 bis 5, aufweisend eine Wärmeleitfähigkeit kleiner oder gleich 29 mW/m·K und eine Dichte von mindestens 40 kg/m³, vorzugsweise größer oder gleich 50 kg/m³, insbesondere zwischen 55 und 80 kg/m³, besonders zwischen 50 und 65 kg/m³, besonders bevorzugt zwischen 55 und 65 kg/m³.

7. Verfahren zur Herstellung eines Dämmstofferzeugnisses auf Basis von Mineralfasern, aufweisend die nachfolgenden Prozeßschritte:
• Herstellung von Mineralfasern durch innere Zentrifugierung
• Aufnehmen der Mineralfasern auf einem Aufnahmeband mit einer Geschwindigkeit V0
• Fördern der Mineralfasern über eine erste Gruppe von Förderorganen, wobei die Geschwindigkeit des ersten Förderorgans der ersten Fördergruppe zwischen 100% und 105% von V₀ beträgt,
• Fördern der Mineralfasern über eine zweite Gruppe von Förderorganen, wobei die Geschwindigkeit des ersten Förderorgans der zweiten Fördergruppe zwischen 108% und 120% von V₀, vorzugsweise zwischen 110% und 115% von von V₀ beträgt.

8. Verfahren nach Anspruch 7, wobei die Förderorgane der zweiten Gruppe alle eine höhere Geschwindigkeit als die der Förderorgane der ersten Gruppe aufweisen.

9. Verfahren nach Anspruch 7 oder 8, wobei die Anzahl der Förderorgane der ersten Gruppe zwischen 3 und 10, vorzugsweise zwischen 4 und 8, insbesondere zwischen 5 und 7 beträgt.

10. Verfahren nach einem der Ansprüche 7 bis 9, wobei die Anzahl der Förderorgane der zweiten Gruppe zwischen 2 und 5, vorzugsweise 2 oder 3 beträgt.

11. Verfahren nach einem der Ansprüche 7 bis 10, wobei die Geschwindigkeit eines jeden Förderorgans der ersten Gruppe um den gleichen Wert wie für das vorhergehende Förderorgan ansteigt.

12. Verfahren nach einem der Ansprüche 7 bis 11, wobei die Geschwindigkeit eines jeden Förderorgans der zweiten Gruppe um den gleichen Wert wie für das vorhergehende Förderorgan ansteigt oder die Geschwindigkeit eines jeden Förderorgans der zweiten Gruppe um schneller als für das vorhergehende Förderorgan ansteigt.

13. Verfahren nach einem der Ansprüche 7 bis 12, wobei mindestens bei den letzten beiden Förderorganen der zweiten Gruppe die Mineralfasern, zunehmend komprimiert werden, indem sie zwischen den wenigsten zwei letzten Förderorganen und wenigstens zwei oberen Antriebsvorrichtungen geführt werden.

## Claims

1. A thermal insulation product based on mineral wool comprising mineral fibers, the product comprising two main faces and longitudinal and transverse edges perpendicular to the main faces, the product being **characterized by** the following orientation fractions:
- a longitudinal orientation fraction TO_{L}(0°+/-6°) greater than or equal to 48%, or even 50%, along an angle of more or less 6° with respect to the plane of the main faces, when the mineral fibers are counted only in a longitudinal cross-section, and
- a mean orientation fraction TOₘ(0°+/-6°) greater than or equal to 40%, or even 45%, along an angle of more or less 6° with respect to the plane of the main faces, when the mineral fibers are counted both in a transverse cross-section and in a longitudinal cross-section.

2. The thermal insulation product as claimed in claim 1, the product being furthermore **characterized by** the following orientation fractions:
- a longitudinal orientation fraction TO_{L}(0°+/-12°) greater than or equal to 75%, or even 80%, along an angle of more or less 12° with respect to the plane of the main faces, when the mineral fibers are counted only in a longitudinal cross-section, and
- a mean orientation fraction TOₘ(0°+/-12°) greater than or equal to 70%, or even 72%, along an angle of more or less 12° with respect to the plane of the main faces, when the mineral fibers are counted both in a transverse cross-section and in a longitudinal cross-section.

3. The thermal insulation product as claimed in either of claims 1 and 2, the product being furthermore **characterized by** the following orientation fractions:
- a longitudinal orientation fractions TO_{L}(0°+/-24°) greater than or equal to 90% along an angle of more or less 24° with respect to the plane of the main faces, when the mineral fibers are counted only in a longitudinal cross-section, and
- a mean orientation fraction TOm(0°+/-24°) greater than or equal to 85% along an angle of more or less 24° with respect to the plane of the main faces, when the mineral fibers are counted both in a transverse cross-section and in a longitudinal cross-section.

4. The thermal insulation product as claimed in one of claims 1 to 3, in which the mineral fibers have a micronaire value in the range between 8 and 15 L/min.

5. The thermal insulation product as claimed in one of claims 1 to 4, having a thermal conductivity less than or equal to 32 mW/m.K and a density of at least 15 kg/m³, preferably between 15 and 60 kg/m³, in particular between 15 and 27 kg/m³, or even in the range between 18 and 25 kg/m³.

6. The thermal insulation product as claimed in one of claims 1 to 5, having a thermal conductivity less than or equal to 29 mW/m.K and a density of at least 40 kg/m³, preferably greater than or equal to 50 kg/m³, or even between 55 and 80 kg/m³, in particular between 50 and 65 kg/m³, or even between 55 and 65 kg/m³.

7. A method of fabrication of a thermal insulation product based on mineral wool, comprising the following steps:
- fabrication of mineral fibers by internal centrifugation,
- reception of the mineral fibers on a reception belt having a speed V₀,
- conveying of the mineral fibers on a first group of conveyers, the speed V₁ of the last conveyer of the first group of conveyers being in the range between 100% and 105% of V₀,
- conveying the mineral fibers on a second group of conveyers, the speed V₂ of the last conveyer of the second group of conveyers being in the range between 108% and 120% of V₀, preferably between 110% and 115% of V₀.

8. The method as claimed in claim 7, in which the conveyers of the second group all have a speed greater than that of the conveyers of the first group.

9. The method as claimed in either of claims 7 and 8, in which the number of conveyers of the first group is in the range between 3 and 10, preferably between 4 and 8, in particular between 5 and 7.

10. The method as claimed in one of claims 7 to 9, in which the number of conveyers of the second group is in the range between 2 and 5, preferably 2 or 3.

11. The method as claimed in one of claims 7 to 10, in which the speed of each conveyer of the first group increases by the same amount as for the preceding conveyer.

12. The method as claimed in one of claims 7 to 11, in which the speed of each conveyer of the second group increases by the same amount as for the preceding conveyer or the speed of each conveyer of the second group increases faster than that of the preceding conveyer.

13. The method as claimed in one of claims 7 to 12, in which, for the two last conveyers at least, the mineral fibers are progressively compressed when going between at least the last two conveyers and at least two upper driving devices.
